# EUROPEAN PATENT APPLICATION

(11) **EP 0 955 078 A1**
(43) Date of publication of application: **10.11.1999**
(21) Application number: 99107405.5
(22) Date of filing: 26.04.1999
(51) Int. Cl.: B01D 29/11, B01D 46/52, B01D 39/14

(54) **Filter for fluids having differentiated filtration regions**

(30) Priority: 06.05.1998 IT MI980987
(71) Applicant: SOGEFI S.p.A., 46100 Mantova (IT)
(72) Inventor: Baracchi, Paolo, 10100 Torino (IT); Crovetti, Claudio, 46030 Virgilio (Mantova) (IT); Fracassi, Alberto, 46100 Mantova (IT); Gerola, Davide, 46100 Mantova (IT)
(74) Representative: Modiano, Guido, Dr.-Ing.

(57) **Abstract**

A filter for fluids comprising a container defining a chamber connected to an inlet connector and to an outlet connector; the chamber contains a filtering mass which is crossed by the circulation of a fluid to be filtered. The filtering mass comprises at least one layer (1) which is made of paper, is meant to be the first one crossed by the fluid and is suitable to produce a coarse filtration. A second layer (2) is also present which provides a fine filtration.

## Description

The present invention relates to a filter for fluids.

It is known that many fields of technology use filters meant to retain impurities contained in the most disparate fluids.

This is the case, for example, of the circuits for lubricating oil of internal-combustion engines, which is pumped continuously, during operation, from a sump which acts as a reservoir and is sent to lubricate the kinematic couplings provided in the motors after passing through a filter which retains the impurities.

However, filters are also found in the circuits that carry Diesel fuel from the tank to internal-combustion engines or boilers and in the gasoline circuits of said engines, and there is also a wide range of air filters for civil, industrial and vehicle air-conditioning systems.

Conventional filters have various constructive shapes, but substantially they all consist of a structure for supporting and containing a filtering mass through which the fluid to be filtered is made to pass by flowing between a region connected to an inlet connector and a region connected to an outlet connector.

The filtering mass too takes on the most disparate shapes, both in terms of the material used and in terms of the processing method; a widely used filtering medium is constituted by a sheet which comprises a plurality of layers and is inserted in the filter after being folded or rolled up so as to give a large area to the filtering surface despite the compact size of the filter.

More specifically, the sheet comprises a layer which, on its own, performs the proper filtering function, retaining all the impurities contained in the fluid to be filtered, regardless of their size so long as they are above a technically compatible minimum size, and such layer is accompanied by at least one layer which acts purely as a support; the layer that performs the filtering function is usually made of glass fiber, while the one or more supporting layers are made of paper, always arranged at the outlet of the fluid, or of synthetic fibers.

The glass fiber, the paper and the synthetic fibers can optionally receive the addition of other substances in a manner known per se.

Hereinafter, when using the terms "glass fiber", "paper" or "synthetic fibers", it is understood that such terms refer to said materials with the optional addition of other substances.

As regards the paper, it should also be noted that it is always cellulose-derived paper.

The drawback of the described type of filtering mass is the fact that any increase in filtration efficiency has a negative effect on accumulation capacity.

Accordingly, the aim of the present invention is to provide a filter for fluids having a filtering mass which can optimize operating conditions both in terms of accumulation capacity and filtration efficiency.

This aim is achieved by a filter for fluids, according to the invention, which comprises a container defining a chamber which is connected to an inlet connector and to an outlet connector, said chamber containing a filtering mass which is crossed by the circulation of a fluid to be filtered, characterized in that said filtering mass comprises at least one layer which is meant to be the first one crossed by said fluid, is suitable to produce a coarse filtration and is made of paper, and a second layer which is adapted to provide a fine filtration.

Advantageously, the filter is also characterized in that the filtering mass comprises a third supporting layer which is arranged so as to be last layer crossed by the fluid.

Further characteristics and advantages of the present invention will become apparent from the following detailed description of some preferred but not exclusive embodiments thereof, illustrated only by way of non-limitative example in the accompanying drawings, wherein:
Figure 1 is a perspective view of a portion of a sheet of filtering mass according to a first embodiment of the present invention;
Figure 2 is a partially sectional side view of a filter for lubricating oil which is provided with a filtering mass formed by a sheet of the type shown in Figure 1;
Figure 3 is a perspective view of the filtering mass of the filter of Figure 2;
Figure 4 is an enlarged-scale partial sectional view, taken along the plane IV-IV of Figure 3;
Figure 5 is a partially sectional side view of a filter for Diesel fuel provided with a filtering mass formed by a sheet of the type shown in Figure 1;
Figure 6 is a perspective view of the filtering mass of the filter of Figure 5;
Figure 7 is an enlarged-scale partial sectional view, taken along the plane VII-VII of Figure 6;
Figure 8 is a partially sectional side view of an air filter provided with a filtering mass formed by a sheet of the type shown in Figure 1;
Figure 9 is a perspective view of the filtering mass of the filter of Figure 8;
Figure 10 is an enlarged-scale partial sectional view, taken along the plane X-X of Figure 9;
Figure 11 is a perspective view of the filtering mass of an air filter for a conditioning system;
Figure 12 is an enlarged-scale partial sectional view, taken along the plane XII-XII of Figure 11;
Figures 13, 14 and 15 are views of a portion of a sheet of filtering mass according to different embodiments of the invention.

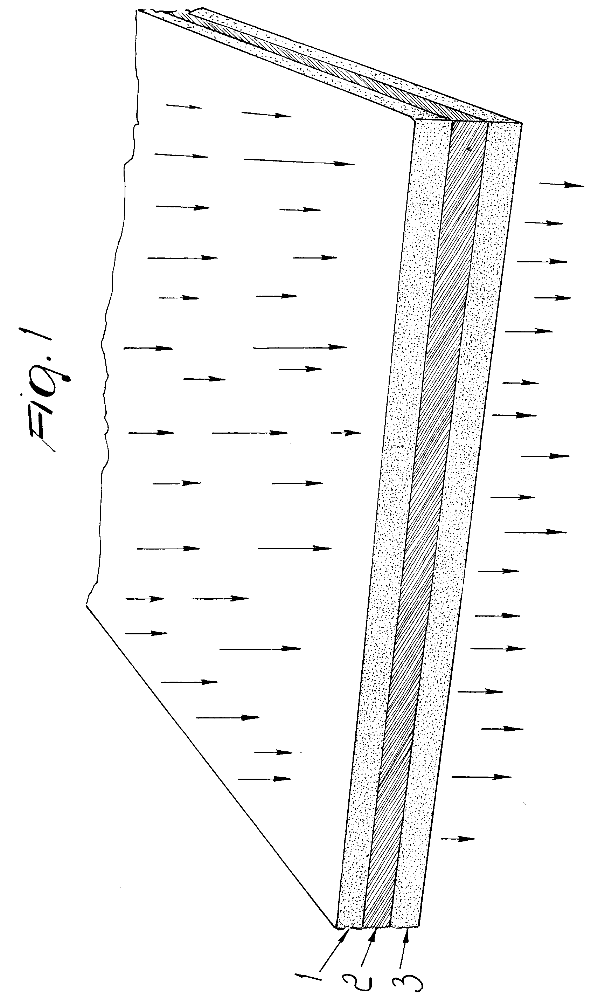

With reference to Figure 1, the reference numeral 1 designates the first paper layer meant to be crossed by the fluid to be filtered, as shown by the arrows. Such layer is suitable to produce a coarse filtration, i.e., to retain particles larger than, for example, 25 microns.

The reference numeral 2 designates a layer made of glass fibers, which is suitable to provide a fine filtration, i.e., to retain particles of impurities larger than, for example, 7 microns.

Finally, the reference numeral 3 designates a supporting layer which is arranged so as to be the last layer crossed by the fluid. Such layer is made of a paper which obviously has a higher permeability than, or at the most the same permeability as, the paper of the first layer 1.

The three layers, before being folded or rolled up to form the filtering mass to be inserted in a filter, can be joined by simple contact or can be rigidly coupled for example by gluing, stitching, thermal bonding or pressure points: said layers might also be produced together during a single formation process.

The described filtering mass has a high functionality, because the particles of impurities are retained so as to be distributed over two layers according to their size; this fact gives the filter a high accumulation capacity and optimum efficiency, which is also the result of the possibility to vary the characteristics of the individual layers.

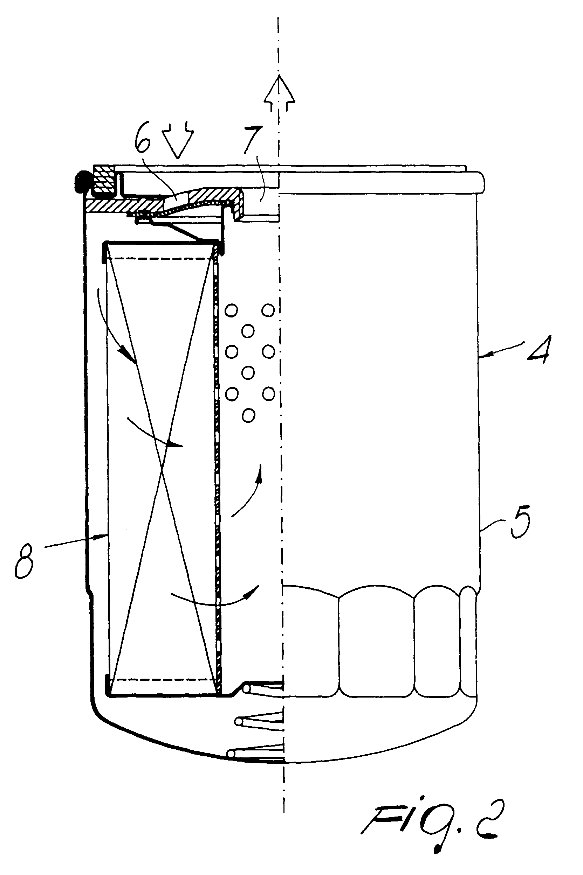

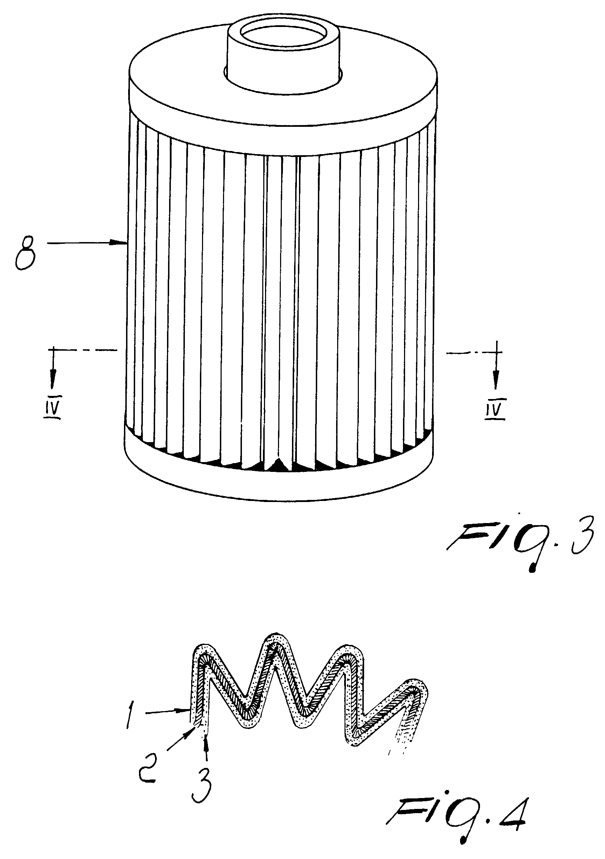

All this is confirmed by tests conducted on oil filters executed according to the structure shown in Figures 2, 3 and 4 with a filtering mass according to Figure 1.

The material of the layer 3 directed toward the outlet of the fluid was kept constant, adopting paper with a higher permeability than the other two layers, and the material, i.e. glass fiber, that constituted the intermediate layer 2 on which filtration efficiency is substantially dependent was also kept constant, and different types of paper, with different permeabilities for an equal average grammage, were adopted for the layer 1, and it was found that the accumulation capacity of the filter increases as the permeability of layer 1 decreases, while filtration efficiency remains substantially constant owing to the unchanging characteristics of the material of layer 2.

Moreover, it has been found that if the permeability of the paper that constitutes layer 1 is kept the same, by varying the degree of filtration of the glass fiber that constitutes layer 2 an increase in the accumulation capacity is achieved as said degree of filtration increases.

It has thus been found experimentally that it is possible to achieve high filtration efficiency and at the same time a high accumulation capacity substantially thanks to the contribution of the layer of paper 1 arranged at the inlet of the fluid, which can be constituted equally by oil, fuel or air.

A plurality of filters comprising a filtering mass produced by using the sheet of Figure 1 is now described; such filters are chosen merely by way of example.

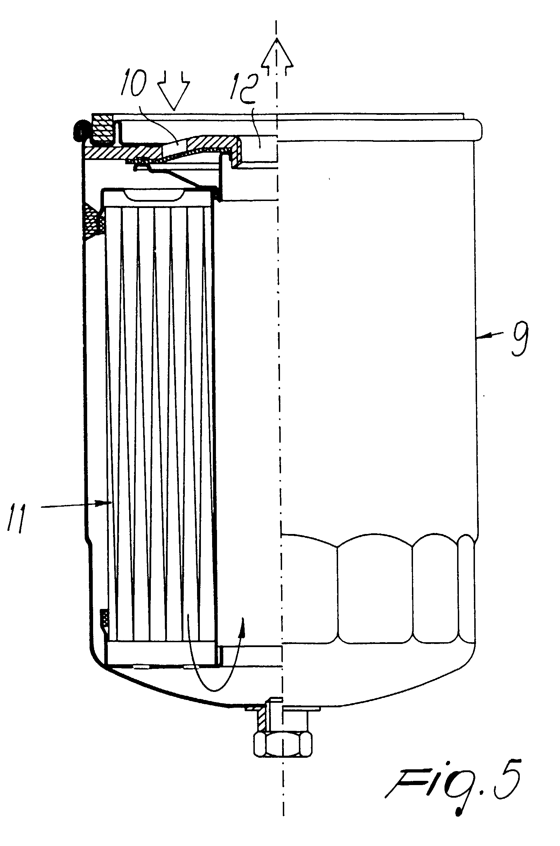

With reference to Figures 2, 3 and 4, the reference numeral 4 designates a lubricating oil filter which comprises a per se known structure which is suitable to produce, inside a container 5, the oil circulation shown by the arrows between the inlet connector 6 and the outlet connector 7, passing through the filtering mass 8, which is formed by folding, as shown in Figure 4, the sheet of Figure 1.

Fuel filters also have the same structure.

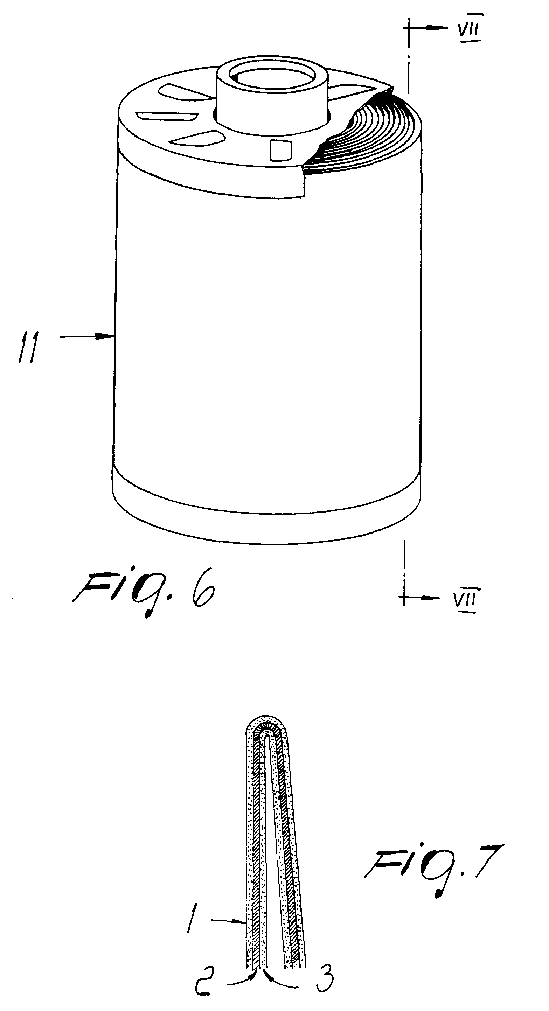

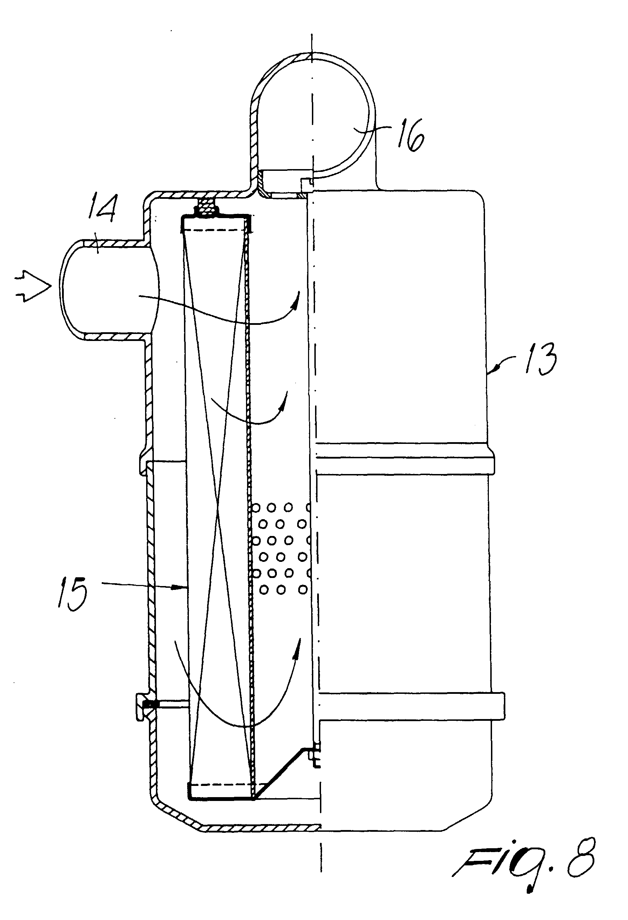

Figures 5, 6 and 7 relate to a filter 9, which is meant to filter Diesel fuel which is introduced through a connector 10, flows along the circuit shown by the arrows, passing through a filtering mass 11 obtained by rolling the sheet of Figure 1, and leaves through a connector 12.

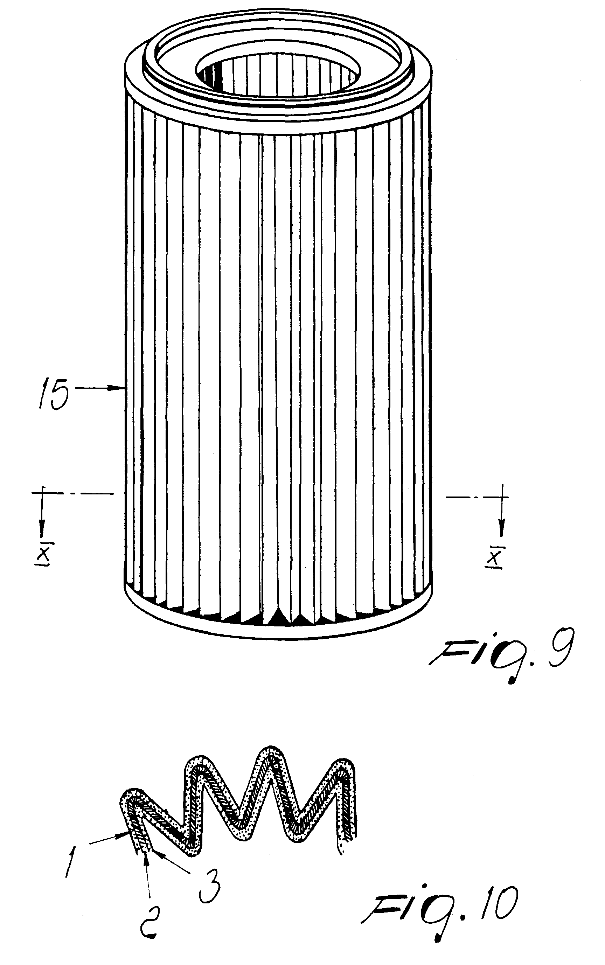

Figures 8, 9 and 10 illustrate characteristics of an air filter 13 for a heavy-duty application in which the air enters through a connector 14 and flows through a circuit which makes it pass through a filtering mass 15 obtained by folding, as shown in Figure 10, the sheet of Figure 1, and then leaves through a connector 16.

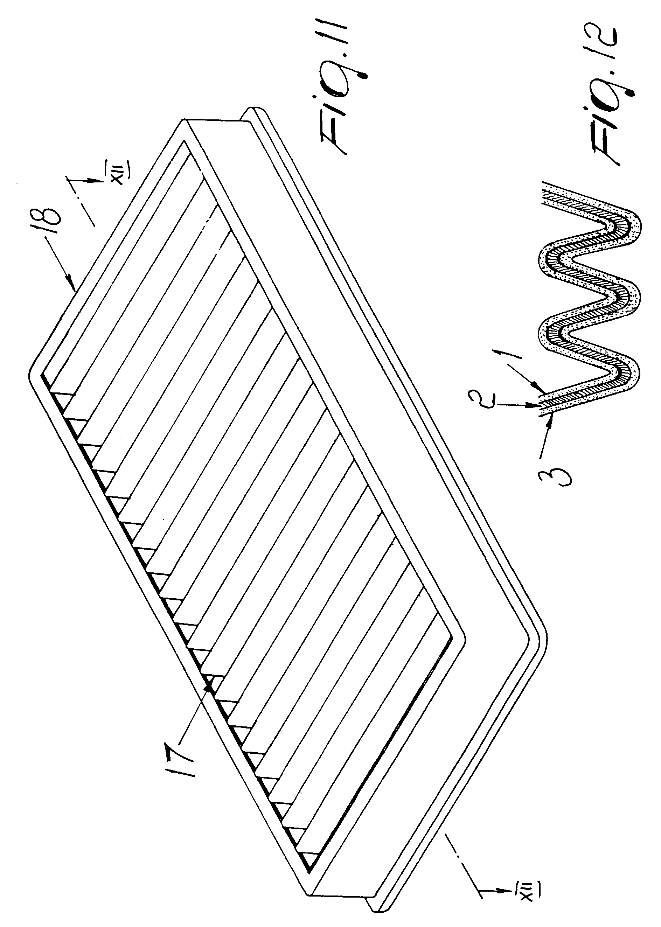

Filtering mass 17 of an air filter 18 for a conditioning system, to which Figures 11 and 12 relate, is also formed by folding the sheet of Figure 1.

To conclude the description of the embodiment of the sheet of filtering mass shown in Figure 1, it is noted that layer 2 can be made of synthetic fibers or paper, instead of glass fiber, having a higher degree of filtration than layer 1, and that the supporting layer 3 can also be made of non-woven fabric or mesh instead of paper.

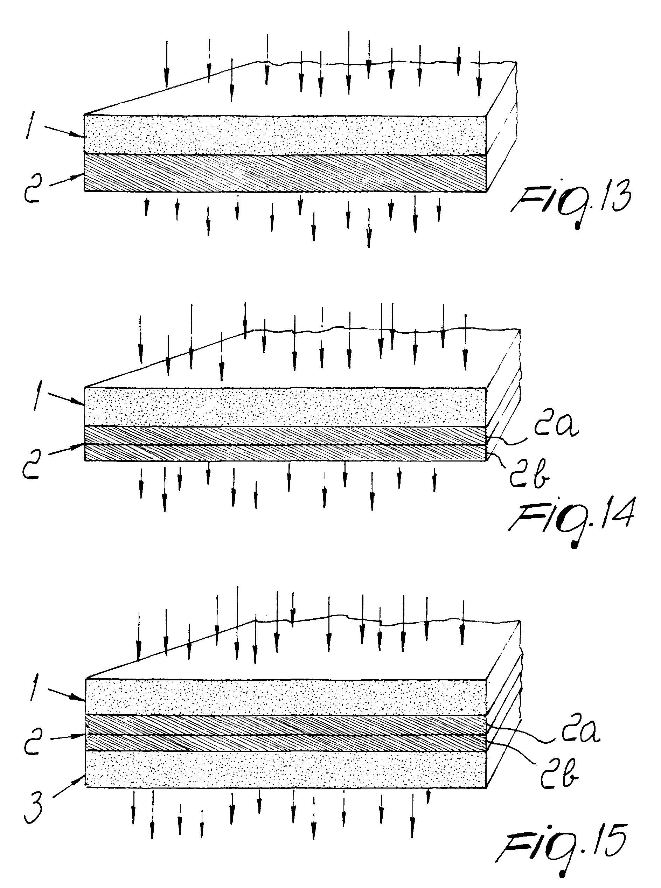

Figure 13 illustrates a different embodiment in which the sheet of filtering mass comprises only the layers 1 and 2 which are meant to be crossed successively by the fluid to be filtered, entering through the layer 1 to provide, respectively, a coarse filtration and a fine filtration, which are produced exactly as described for the corresponding layers of the embodiment shown in Figure 1 and without a supporting layer.

Figure 14 illustrates a further embodiment in which, without altering the description given for layer 1, layer 2 is formed by means of two substrates 2a and 2b, each of which can be made of glass fiber, synthetic fibers, or paper with a higher degree of filtration than layer 1; it is thus possible to have two substrates with identical or different fiber characteristics according to requirements.

In the embodiment of Figure 14 there is no supporting layer; such layer is instead present, and designated by the reference numeral 3, in the embodiment shown in Figure 15, which is otherwise identical.

The described invention is susceptible of numerous other modifications and variations, all of which are within the scope of the inventive concept; all the details may further be replaced with other technically equivalent elements.

The disclosures in Italian Patent Application No. MI98A000987 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A filter for fluids, comprising a container defining a chamber which is connected to an inlet connector and to an outlet connector, said chamber containing a filtering mass which is crossed by the circulation of a fluid to be filtered, characterized in that said filtering mass comprises at least one layer which is meant to be the first one crossed by said fluid, is suitable to produce a coarse filtration and is made of paper, and a second layer which is suitable to provide a fine filtration.

2. The filter according to claim 1, characterized in that the second layer suitable to produce a fine filtration is made monolithically of glass fiber.

3. The filter according to claim 1, characterized in that the second layer suitable to produce a fine filtration is made monolithically of synthetic fibers.

4. The filter according to claim 1, characterized in that the second layer suitable to produce a fine filtration is made monolithically of paper with a higher degree of filtration than the first layer.

5. The filter according to claim 1, characterized in that the second layer suitable to produce a fine filtration is made of two substrates, each of which is made of glass fiber, synthetic fibers, or paper with a higher degree of filtration than the first layer.

6. The filter according to claim 1, characterized in that the at least two layers are mutually joined by simply resting on each other.

7. The filter according to claim 1, characterized in that the at least two layers are coupled.

8. The filter according to claim 1, characterized in that the at least two layers are rigidly coupled by being produced together during a single formation process.

9. The filter according to claim 1, characterized in that the filtering mass comprises a third supporting layer which is arranged so that it is the last layer crossed by the fluid.

10. The filter according to claim 9, characterized in that the third supporting layer is made of paper.

11. The filter according to claim 9, characterized in that the third supporting layer is made of non-woven fabric.

12. The filter according to claim 9, characterized in that the third supporting layer is made of mesh.
